# DEMANDE DE BREVET EUROPEEN

(11) **EP 4 368 274 A1**
(43) Date de publication de la demande: **15.05.2024**
(21) Numéro de dépôt: 23209874.9
(22) Date de dépôt: 14.11.2023
(51) Int. Cl.: B01D 53/00, B01D 53/04, B01D 53/047, B01D 53/22, B01D 53/26

(54) **PROCEDE DE TRAITEMENT D'UN GAZ ISSU D'UN GISEMENT POUR OBTENIR DE L'HELIUM ET SYSTEME DE MISE EN OEUVRE D'UN TEL PROCEDE**

(30) Priorité: 14.11.2022 FR 2211834
(71) Demandeur: Centre National de la Recherche Scientifique (CNRS), 75016 Paris (FR); Université de Lorraine, 54000 Nancy (FR); 45-8 Group, 57000 Metz (FR)
(72) Inventeur: CLOTEAUX, Anaëlle, 57000 METZ (FR); CASTEL, Christophe, 54500 VANDOEUVRE-LES-NANCY (FR); FAVRE, Eric, 54000 NANCY (FR)
(74) Mandataire: Regimbeau

(57) **Abrégé**

L'invention concerne un procédé de traitement d'un gaz , le procédé comprenant une étape d'introduction d'un gaz comprenant de l'hélium dans une unité membranaire, l'unité membranaire comprenant trois membranes polymères en séries, au moins une des membranes étant configurée pour que son perméat soit plus riche en hélium que son rétentat, tandis qu'au moins une autre des membranes est configurée pour que son rétentat soit plus riche en hélium que son perméat, l'unité membranaire mettant en oeuvre une étape de séparation membranaire de manière à obtenir un gaz en sortie de l'unité membranaire présentant une pureté en hélium supérieure à la pureté en hélium du gaz introduit dans l'unité membranaire.

## Description

### DOMAINE TECHNIQUE

L'invention concerne l'extraction et la purification de l'hélium. Et l'invention concerne plus particulièrement l'extraction et la purification de l'hélium au moyen d'un système membranaire.

### ETAT DE LA TECHNIQUE

Aujourd'hui, la majorité de l'hélium produit provient de la purification du gaz naturel qui contient un faible pourcentage d'hélium. La viabilité économique de la récupération de l'hélium à partir d'un mélange gazeux est dépendante de la composition de ce mélange gazeux et du procédé de production.

Généralement, dans les unités de production à grande échelle l'hélium est récupéré par distillation cryogénique. L'hélium est alors obtenu en deux étapes : la première étape produit de l'hélium brut (50-70%) puis la seconde étape produit de l'hélium à un grade 5 (99,9995 %) qui est ensuite liquéfié. Cependant ces technologies sont extrêmement coûteuses, consommatrices d'énergie et exigent des installations très importantes.

Il existe un procédé hydride associant technologie membranaire et adsorption modulé en pression (PSA ou « Pressure Swing Adsorption » dans la terminologie anglo-saxonne) qui permet de séparer l'hélium sans utiliser la distillation cryogénique. Ce procédé est particulièrement adapté aux petites productions pour lesquelles les investissements importants liés à la distillation cryogénique ne sont pas rentables.

L'hélium est très perméable dans la plupart des membranes polymères utilisées couramment. Il est notamment plus perméable que l'azote et le méthane. C'est pourquoi cette technologie a déjà été mise en oeuvre sur des gisements d'hélium composés de méthane et d'azote. Cependant les technologies membranaires existantes ne permettent pas d'atteindre des performances suffisamment élevées sur des gisements d'hélium riche en dioxyde de carbone.

Certains procédés, comme celui du document US 2016/0228813A1 mettent en oeuvre des unités membranaires comprenant des membranes métalliques. Mais ces unités membranaires exigent des conditions de températures très élevées, ce qui induit une consommation énergétique accrue.

### EXPOSE DE L'INVENTION

Un des buts de l'invention est de résoudre au moins l'un de ces problèmes en proposant un procédé efficace pour la production d'hélium permettant d'obtenir des performances élevées.

A cet effet, l'invention propose un procédé de traitement d'un gaz , le procédé comprenant une étape d'introduction d'un gaz comprenant de l'hélium dans une unité membranaire, l'unité membranaire comprenant trois membranes polymères en séries, au moins une des membranes étant configurée pour que son perméat soit plus riche en hélium que son rétentat, tandis qu'au moins une autre des membranes est configurée pour que son rétentat soit plus riche en hélium que son perméat, l'unité membranaire mettant en oeuvre une étape de séparation membranaire de manière à obtenir un gaz en sortie de l'unité membranaire présentant une pureté en hélium supérieure à la pureté en hélium du gaz introduit dans l'unité membranaire.

La mise en oeuvre dans l'unité membranaire de trois membranes polymères permet de simplifier la configuration de l'unité membranaire et de limiter la consommation en énergie. De plus, la mise en oeuvre d'au moins une membrane sélective à l'hélium et d'au moins une membrane sélective au dioxyde de carbone permet d'obtenir en sortie de l'unité membranaire un gaz présentant une pureté en hélium de plus de 90% à partir d'un gaz en entrée de l'unité membranaire dont la pureté en hélium est inférieure à 10% et avec un nombre réduit de membranes.

Avantageusement, mais facultativement, le procédé exposé comprend l'une au moins des caractéristiques suivantes, prise seule ou dans une quelconque combinaison :
le procédé comprend l'étape d'introduction d'un gaz comprenant de l'hélium et du dioxyde de carbone dans une unité de séparation du dioxyde de carbone mettant en oeuvre une étape de séparation du dioxyde de carbone en une phase liquide comprenant tout ou partie du dioxyde de carbone du gaz introduit dans l'unité de séparation du dioxyde de carbone et le gaz introduit dans l'unité membranaire et présentant une pureté en hélium supérieure à la pureté en hélium du gaz introduit dans l'unité de séparation du dioxyde de carbone ;
le procédé comprend une étape d'introduction d'un fluide comprenant de l'hélium, du CO2 et des impuretés dans une unité de prétraitement mettant en oeuvre une étape de pré-traitement pour obtenir un gaz exempt au moins d'eau, d'éléments chimiques indésirables et d'éléments solides formant des impuretés ;
le gaz introduit dans l'unité membranaire comprend de l'hélium, du dioxyde de carbone et une majorité d'azote et le gaz en sortie de l'unité membranaire présente une pureté en hélium d'au moins 90% ;
l'unité membranaire comprenant un premier, un deuxième et un troisième étage membranaire, chacun comprenant une des membranes, procédé dans lequel la séparation membranaire du gaz introduit dans l'unité membranaire est réalisée successivement par chaque étage membranaire et comprend : une séparation du gaz introduit dans l'unité membranaire en un perméat et un rétentat, réalisée par la membrane ; une recompression du perméat ; et un recyclage intermédiaire du perméat recompressé consistant à transmettre une partie du perméat recompressé, vers une entrée de l'unité membranaire considérée ;
la séparation membranaire est réalisé par une communication :
   - d'une partie d'un premier perméat plus riche en hélium qu'un premier rétentat du premier étage membranaire au deuxième étage membranaire,
   - d'un deuxième rétentat plus riche en hélium qu'un deuxième perméat du deuxième étage membranaire au troisième étage membranaire,
   - d'une partie du deuxième perméat au premier étage membranaire,
   - d'une partie d'un troisième perméat plus riche en hélium qu'un troisième rétentat du troisième étage membranaire à une sortie de l'unité membranaire, et
   - du troisième rétentat au premier étage membranaire ;
le procédé comprend une étape de séparation de l'hélium mise en oeuvre par une unité de séparation de l'hélium, l'étape de séparation de l'hélium comprenant, outre la séparation membranaire, une compression et une purification par adsorption par inversion de pression cryogénique, la purification permettant d'augmenter la pureté en hélium du gaz en sortie de l'unité membranaire afin d'obtenir un gaz en sortie de l'unité de séparation de l'hélium présentant une pureté en hélium d'au moins 99,999% ;
la séparation du dioxyde de carbone comprend une compression et un refroidissement du gaz introduit dans l'unité de séparation du dioxyde de carbone à une pression et une température permettant la liquéfaction partielle du gaz introduit dans l'unité de séparation du dioxyde de carbone au moyen d'un train d'échangeurs ;
la phase liquide est successivement séparée du gaz introduit dans l'unité membranaire et détendue et envoyée dans une colonne de stripping (ou « stripage », en français), de manière à obtenir un flux liquide à un niveau de qualité alimentaire en pied de colonne de stripping prêt à être stocké ;

Selon un autre aspect, il est proposé un système comprenant une unité membranaire comprenant trois membranes polymères en séries, au moins l'une des membranes étant telle que son perméat soit plus riche en hélium que son rétentat à l'inverse d'au moins une autre des membranes, l'unité membranaire étant configurée pour mettre en oeuvre une étape de séparation membranaire d'un procédé de traitement d'un gaz introduit dans l'unité membranaire comprenant de l'hélium, selon lequel un gaz en sortie de l'unité membranaire présente une pureté en hélium supérieure à la pureté en hélium du gaz introduit dans l'unité membranaire ;

Avantageusement, mais facultativement, le système exposé comprend l'une au moins des caractéristiques suivantes, prise seule ou dans une quelconque combinaison :
le système comprend une unité de séparation du dioxyde de carbone disposée en amont de l'unité membranaire et configurée pour mettre en oeuvre une étape de séparation du dioxyde de carbone contenu dans un gaz introduit dans l'unité de séparation du dioxyde de carbone et selon laquelle on obtient une phase liquide comprenant tout ou partie du dioxyde de carbone du gaz introduit dans l'unité de séparation du dioxyde de carbone et une phase gazeuse comprenant de l'hélium et présentant une pureté en hélium supérieure à la pureté en hélium du gaz introduit dans l'unité de séparation du dioxyde de carbone ;
le système comprend une première unité disposée à une entrée du système et configurée pour mettre en oeuvre une étape de pré-traitement d'un fluide comprenant de l'hélium, du dioxyde de carbone et des impuretés et selon laquelle on obtient un gaz exempt au moins d'eau, d'éléments chimiques indésirables et d'éléments solides formant des impuretés ;
l'unité membranaire comprend :
   - un premier étage membranaire comprenant une première membrane telle que son perméat soit plus riche en hélium que son rétentat,
   - un deuxième étage membranaire recevant en entrée une partie du perméat du premier étage membranaire et comprenant une deuxième membrane telle que son rétentat soit plus riche en hélium que son perméat, et
   - un troisième étage membranaire recevant en entrée le rétentat d'une deuxième unité membranaire et comprenant une troisième membrane telle que son perméat est plus riche en hélium que son rétentat ;
le système comprend une dernière unité, la dernière unité comprenant l'unité membranaire un compresseur et un purificateur cryogénique ;
l'unité de séparation comprend un train d'échangeurs adapté pour permettre le refroidissement du gaz introduit dans l'unité de séparation du dioxyde de carbone et un ballon de séparation adapté pour séparer le gaz introduit dans l'unité de séparation du dioxyde de carbone en une phase liquide et le gaz introduit dans l'unité membranaire ;
l'unité de séparation du dioxyde de carbone comprend un détendeur Joule-Thomson et une colonne de stripping adaptés pour obtenir une phase liquide présentant une pureté alimentaire en dioxyde de carbone.

Le procédé combine avantageusement la technologie membranaire, la technologie par adsorption et une séparation par liquéfaction pour produire un gaz composé d'hélium à plus de 90% avec un taux de récupération supérieur à 90% à partir d'un gaz contenant une fraction d'hélium, typiquement entre 0,01 et 10%, et une majorité de dioxyde de carbone.

La mise en oeuvre de ce procédé présente une emprise au sol réduite en comparaison des procédés de production par cryogénie.

Le CO₂ est liquéfié et purifié afin d'atteindre une qualité alimentaire.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un système de traitement selon un mode de réalisation de l'invention ;
- la figure 2 illustre schématiquement une unité membranaire constituée de trois modules membranaires d'un système de traitement selon l'invention ;
- la figure 3 illustre des étapes de différents modes de réalisation d'un procédé de traitement selon l'invention ;
- la figure 4 illustre un système de traitement selon un mode de réalisation préféré de la présente invention.

Sur l'ensemble des figures les éléments similaires portent des références identiques.

### DESCRIPTION DETAILLEE

### Principes généraux

L'hélium est un composé chimique d'une grande importance pour de nombreuses applications par exemples industrielles ou médicales. La majorité de l'hélium est produit à partir de certains gisements de gaz naturels qui en contiennent une faible fraction. Récemment de nouveaux gisements d'hélium différents du gaz naturel ont été découverts. Il s'agit de gisements riches en azote ou en dioxyde de carbone.

Les procédés séparation de l'hélium développés pour les gisements de type gaz naturel ne sont pas adapté à ces nouveaux gisements. Il est donc nécessaire de développer de nouveaux procédés adaptés à ces gisements. Ce procédé doit permettre d'obtenir de l'hélium d'une pureté élevé (appelé grade 5, soit une pureté en hélium de 99.999%) avec un taux de récupération élevé. Dans ce document, par pureté en hélium on entend le pourcentage volumique d'hélium dans le mélange gazeux ; et par taux de récupération on entend un rapport entre le flux d'hélium en aval du procédé et le flux d'hélium en amont du procédé.

Il est possible de séparer des mélanges gazeux en jouant sur les différences de perméabilités des composés du mélange au travers d'une membrane. On parle de perméation gazeuse. Le mélange gazeux alimente un module dans lequel est disposée une membrane. La séparation des gaz se fait sous l'effet de la différence de pression de chaque côté de la membrane et de la différence de perméabilités des composés à travers cette dernière. Les membranes comprennent avantageusement une très fine couche de séparation à leur surface, de sorte que la perméance de la membrane soit aussi grande que possible. La perméance représente le flux de gaz traversant la membrane par unité de temps, de surface et de pression différentielle entre chacun de leur côté. Les membranes définissent un côté haute pression, représentant le côté amont de la membrane et un côté basse pression, représentant le côté aval de la membrane. La plupart des membranes utilisées dans l'industrie actuellement sont de type polymère, par exemple : polyimide, polysulfone, acétate de cellulose, polyphenyloxide, polycarbonate, polydiméthylsiloxane, etc.

On appelle rétentat l'ensemble du flux se produisant du côté haute pression de la membrane et qui ne traverse pas la membrane. Et on appelle perméat l'ensemble du flux sortant du côté basse pression de la membrane.

Par la suite, le terme fluide désigne un mélange gazeux pouvant contenir également une phase liquide dont les composés doivent être séparés à l'aide du procédé ou du dispositif ici décrit et qui contient de l'hélium comme composant. Le fluide introduit dans le système peut être un fluide non traité, un fluide brut issu d'un gisement, par exemple des gaz résiduaires ou un flux de fluide qui a déjà été traité avec une augmentation de la proportion d'hélium. La composition du fluide, ou une partie de celle-ci, sera décrite ci-après.

Par fraction importante d'un composé gazeux dans un gaz, on entend une fraction supérieure à 50% du volume du gaz.

### Présentation générale d'un procédé de traitement d'un gaz

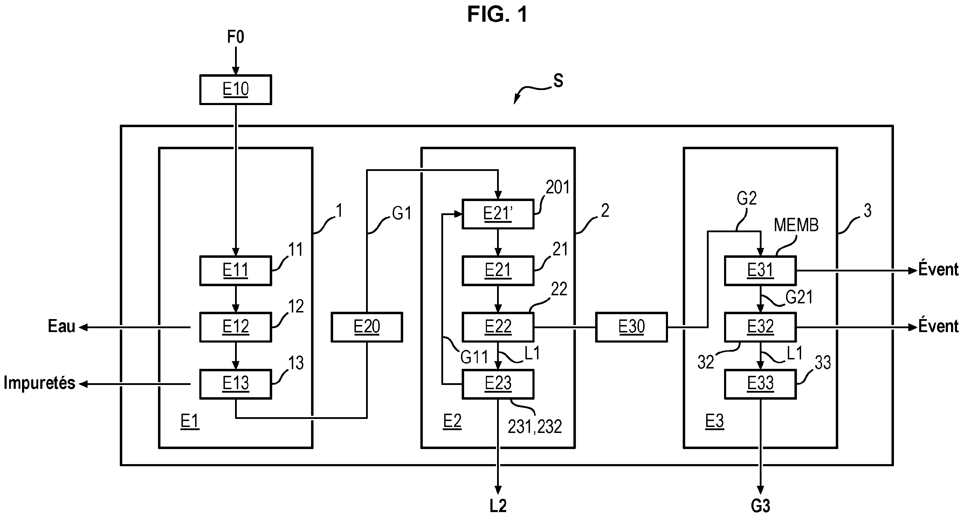

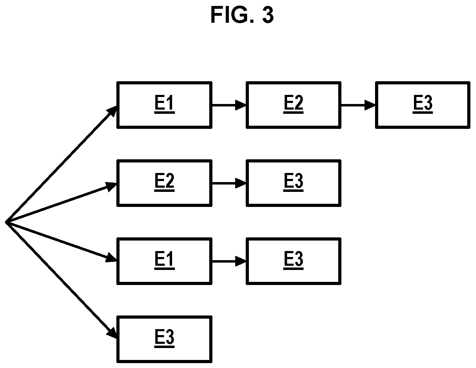

Selon un mode de réalisation illustré sur les figures 1 et 3, un fluide F0 est traité par un système S de traitement comprenant une unité de pré-traitement 1, une unité de séparation du dioxyde de carbone 2 et une unité de séparation de l'hélium 3. Le fluide F0 comprend préférentiellement de l'hélium, du dioxyde de carbone et des impuretés. On note F0 le fluide introduit dans l'unité de pré-traitement 1 du système de traitement S.

L'unité de pré-traitement 1, une fois le fluide F0 introduit (étape E10), met en oeuvre un pré-traitement (étape E1) afin d'obtenir un gaz (G1) exempt au moins d'eau, d'éléments chimiques indésirables et d'éléments solides formant des impuretés à partir du fluide F0. Par la suite, on note gaz G1 le gaz en sortie de l'unité de pré-traitement 1 et introduit dans l'unité de séparation du dioxyde de carbone 2.

L'unité de séparation 2, une fois le gaz G1 introduit (étape E20), met en oeuvre une séparation du dioxyde de carbone (étape E2) afin d'obtenir un gaz (G2) comprenant de l'hélium, dont la pureté en hélium est supérieure à la pureté du gaz G1. De plus, l'unité de séparation 2 permet de récupérer une phase liquide L2 comprenant du dioxyde de carbone et dont la pureté est avantageusement supérieure à 95%. Par la suite, on note gaz G2 le gaz en sortie de l'unité de séparation du dioxyde de carbone 2 et introduit dans l'unité de séparation de l'hélium 3.

Enfin, l'unité de séparation de l'hélium 3, une fois le gaz G2 introduit (étape E30), met en oeuvre une séparation de l'hélium (étape E3) de manière à obtenir, en sortie de l'unité de séparation de l'hélium 3 un gaz (G3) présentant avantageusement une pureté en hélium d'au moins 99,999%. Par la suite, on note gaz G3 le gaz en sortie du système S. L'unité de séparation de l'hélium 3 comprend des membranes polymères Me1, Me2, Me3 propres à filtrer à une température comprise entre 10°C et 50°C, préférentiellement entre 20°C et 40°C, le gaz G2 introduit (étape E30) et comprenant de l'hélium et une fraction de dioxyde de carbone comprise entre 10 et 50 %. Par filtrer on comprendra traiter le gaz qui traverse la membrane, de manière à en modifier la composition, en d'autres termes, les membranes séparent des uns des autres certains composants du gaz.

La mise en oeuvre de chacune des étapes de pré-traitement (étape E1), de séparation du dioxyde de carbone (étape E2) et de séparation de l'hélium (étape E3) est décrite ci-après.

### Procédé et un système de traitement selon un premier mode de réalisation

Le système S illustré sur la figure 1, comprend une unité de pré-traitement 1 qui comprend un étage de transport 11 avantageusement un étage de séchage 12 et avantageusement un étage d'élimination des impuretés 13. L'unité de prétraitement 1 met en oeuvre une étape de pré traitement (étape E1) comprenant, à partir d'un fluide F0 acheminé depuis une source (non représentée) à laquelle il est relié à l'étage de transport 11 qui permet de conduire (étape E11) le fluide F0 à l'étage de séchage 12. L'étage de séchage 12 permet de séparer (étape E12) l'eau liquide et la vapeur et permet d'atteindre, par exemple, une température de rosée de -60 °C. L'étape E13, permet d'éliminer toutes les espèces indésirables pour la suite du procédé du fluide F0 (par exemple : condensats, hydrocarbures, azote, mercure, composés soufrés, poussières, huiles, etc.) mais également tous les éléments chimiques indésirables (hydrocarbures, composés soufrés, huiles, etc.) Ainsi l'unité de pré-traitement 1 permet d'obtenir un gaz G1 sec, à une température de près de 20°C et exempt d'impuretés, à partir du fluide F0.

Le système S comprend en outre une unité de séparation 2 du dioxyde de carbone comprend préférentiellement, un compresseur 201, un train d'échangeurs 21, un ballon de séparation 22, un détendeur 231 et une colonne de stripping 232. L'étape de séparation du dioxyde de carbone (étape E2) mise en oeuvre par l'unité de séparation 2 comprend une introduction (étape E20) du gaz G1 issu de l'unité de pré-traitement en amont dans l'unité de séparation 2.

De manière avantageuse, le gaz G1 est préalablement comprimé (étape E21') au moyen d'un compresseur, à une pression de 50 bars +/- 20%. Le train d'échangeur 21 est adapté pour mettre en oeuvre le refroidissement (étape E21) du gaz G1 (comprimé ou non) dans l'étage de séparation 2. Le train d'échangeur 21 comprend préférentiellement au moins un échangeur de chaleurs de manière à refroidir le gaz G1. En sortie du train d'échangeur 21 les conditions de pression et de température sont configurées pour obtenir une liquéfaction partielle du gaz G1 et préférentiellement de sorte à provoquer la liquéfaction du dioxyde de carbone présent dans le gaz G1. Pour obtenir un tel effet, la température nécessaire est d'au moins 8°C, mais elle peut être inférieure, par exemple de -5°C ou même bien plus basse, afin de s'assurer de la liquéfaction d'une portion, la plus importante possible, du dioxyde de carbone présent dans le gaz G1. Le gaz G1 en partie liquéfié suite au refroidissement (étape E21) est ensuite envoyé dans un ballon de séparation 22 configuré pour séparer le gaz en partie liquéfié (étape E22) en une phase liquide L1 comprenant tout ou partie du dioxyde de carbone du gaz G1 et une phase gazeuse présentant une pureté en hélium supérieure à la pureté en hélium du gaz G1 introduit dans l'unité de séparation 2. La phase gazeuse ainsi obtenue est le gaz G2 qui est ensuite introduit (étape 30) dans l'unité de séparation de l'hélium 3 en aval de l'unité de séparation.

De manière complémentaire, la phase liquide L1 est détendue dans un détendeur 231, par exemple une vanne Joule-Thomson, et envoyée (étape E23) dans une colonne de stripping 232. Le détendeur Joule-Thomson 231 est propre à détendre la phase liquide L1 de manière à pouvoir la transmettre, à la colonne de stripping 232 à une pression de 20 bars, +/-30 %. La colonne de stripping 232 fonctionne selon un procédé bien connu de l'homme du métier, pour purifier la phase liquide L1 et ainsi obtenir une phase liquide L2 comprenant du dioxyde de carbone de qualité alimentaire et de préférence conforme à la norme alimentaire EIGA (DOC 70 / 17 - Carbon Dioxide Food and Beverages Grade, Source Qualification, Quality Standards and Vérification - EUROPEAN INDUSTRIAL GASES ASSOCIATION AISBL), c'est-à-dire une phase liquide L2 composé à plus de 99,9 % de dioxyde de carbone et dont les teneurs en impuretés sont inférieures à celles préconisées par la norme. La phase liquide L2 respectant cette norme est récupérée en pied de la colonne de stripping 232 et est prête à être stockée selon des modalités de type connues de l'homme du métier. Avantageusement, une phase gazeuse G11, récupérée en tête de colonne de stripping 232 est recyclée et réintroduite en entrée de l'unité de séparation 2 afin d'améliorer le taux de récupération du dioxyde de carbone de l'unité de séparation 2. En effet, cette phase gazeuse G11 peut comprendre encore une quantité de dioxyde de carbone.

La séparation du dioxyde de carbone (étape E2) permet d'obtenir une phase liquide L1 comprenant au moins 95% du dioxyde de carbone présent dans le gaz G1 et de le récupérer afin de le stocker à un niveau de qualité alimentaire. En outre il permet d'introduire (étape E30) dans l'unité de séparation de l'hélium 3 le gaz G2, issu de l'unité de séparation 2, dont la fraction en hélium est plus importante que dans le gaz G1 introduit dans l'unité de séparation du dioxyde de carbone 2 et la fraction de dioxyde de carbone a été réduite. Ceci améliore la séparation de l'hélium (étape E3). Selon un mode de réalisation, le gaz G1 présente une fraction importante de dioxyde de carbone et le gaz G2 présente une fraction en dioxyde de carbone inférieure à 50%. La séparation du dioxyde de carbone (étape E2) permet de réduire la fraction de dioxyde de carbone dans le gaz G1 afin de fournir le gaz G2 à l'unité de séparation de l'hélium 3, le gaz G2 ne présentant pas de fraction importante de dioxyde de carbone ce qui améliore la mise en oeuvre de la séparation de l'hélium (étape E3).

L'unité de séparation de l'hélium 3 comprend avantageusement une unité membranaire MEMB, un compresseur 32 et un purificateur 33. La séparation de l'hélium (étape E3) comprend une étape d'introduction (étape E30) du gaz G2 issu de l'unité de séparation en amont dans l'unité membranaire MEMB, une séparation membranaire (étape E31) et avantageusement des étapes de compression (étape E32) et de purification (étape E33).

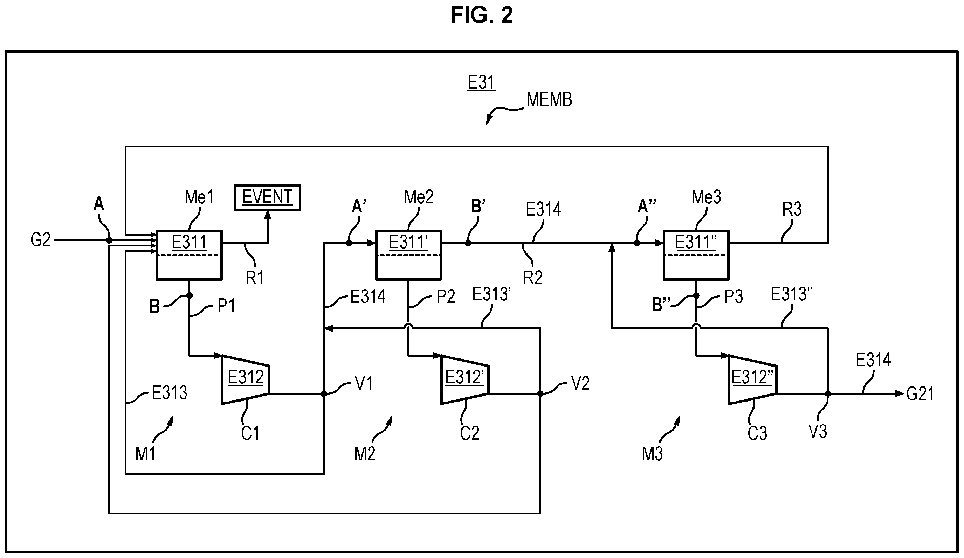

L'unité membranaire MEMB est illustrée en détail sur la figure 2. L'unité membranaire MEMB, est propre à réaliser la séparation membranaire (étape E31) du gaz G2L'unité membranaire MEMB comprend pour cela au moins deux étages membranaires et préférentiellement trois M1, M2, M3, agencés en série. Chacun des étages membranaires M1, M2, M3, comprend une entrée A, A', A", une membrane polymère Me1, Me2, Me3, et préférentiellement, un compresseur C1, C2, C3, une vanne de séparation V1, V2, V3, de flux, une sortie P1, P2, P3, et une sortie R1, R2, R3.

L'unité membranaire MEMB est ainsi propre à réaliser la séparation membranaire (étape E31) du gaz G2 à une température comprise entre 10°C et 50°C, préférentiellement entre 20°C et 40°C, dite température ambiante. Ainsi, il n'est pas nécessaire d'augmenter la température du gaz G2 dans l'unité membranaire MEMB pour permettre la séparation membranaire (étape E31). Une telle unité membranaire MEMB est donc moins consommatrice en énergie qu'une unité membranaire comprenant des membranes métalliques par exemple.

Dans toute l'unité membranaire MEMB, le flux circulant est appelé phase gazeuse et est issu du gaz G2.

Dans chacun des étages membranaires M1, M2, M3, l'entrée A, A', A", est propre à acheminer la phase gazeuse à la membrane Me1, Me2, Me3. La membrane Me1, Me2, Me3, sépare la phase gazeuse en un rétentat R1, R2, R3, et un perméat P1, P2, P3. Comme expliqué précédemment, le perméat P1, P2, P3, est la portion de la phase gazeuse qui traverse la membrane Me1, Me2, Me3. Une sortie B, B', B", de chaque étage membranaire M1, M2, M3, représente soit son flux de perméat P1, P2, P3, ou une portion de celui-ci, soit son flux de rétentat R1, R2, R3. Préférentiellement, la sortie B, B', B", de chaque étage membranaire M1, M2, M3 correspond à son flux le plus riche en hélium. Chaque sortie B et B' est propre à acheminer la phase gazeuse purifiée par l'étage membranaire M1, M2, à l'étage membranaire suivant M2, M3.

Dans chaque étage membranaire M1, M2, M3, la membrane Me1, Me2, Me3, réalise une séparation E311, E311', E311", de la phase gazeuse qui lui est transmise, à la température ambiante. Afin de réaliser cette séparation (étape E311, E311', E311"), la phase gazeuse G2 est régulée en pression par une vanne de régulation (non représentée). La pression du perméat P1, P2, P3, est avantageusement régulée par un compresseur C1, C2, C3. Le compresseur C1, C2, C3, réalise une recompression (étapes E312, E312', E312"), du perméat P1, P2, P3, afin de garantir une pression suffisante à la purification de la phase gazeuse. Une fois recomprimé, la phase gazeuse présente dans le perméat P1, P2, P3, est avantageusement séparée en deux flux par une vanne de séparation V1, V2, V3 afin qu'une partie de la phase gazeuse du perméat P1, P2, P3, subisse un recyclage intermédiaire (étape E313, E313', E313"). Par recyclage intermédiaire on entend un recyclage interne à chaque étage membranaire M1, M2, M3. De manière avantageuse, la partie du flux subissant un recyclage intermédiaire est acheminée vers l'entrée A, A', A", de l'étage membranaire M1, M2, M3, en question et l'autre partie du flux de perméat P1, P2, P3, est soit acheminée vers l'étage membranaire M2, M3 suivant, soit vers l'entrée A, A', A", de l'étage membranaire M1, M2, précédent selon que la sortie B, B', B", de l'étage membranaire M1, M2, M3, en question soit le rétentat R1, R2, R3 ou le perméat P1, P2, P3.

Préférentiellement, l'unité membranaire MEMB comprend au moins un des étages membranaires M1, M2, M3, dont la membranes Me1, Me2, Me3, est propre à laisser passer préférentiellement les molécules d'hélium présentes dans la phase gazeuse et à retenir préférentiellement les autres molécules composant la phase gazeuse, comme par exemple le dioxyde de carbone, et au moins un des étages membranaires M1, M2, M3, dont la membrane Me1, Me2, Me3, est propre à laisser passer préférentiellement les molécules de dioxyde de carbone et à retenir préférentiellement les autres molécules et donc les molécules d'hélium présentes dans la phase gazeuse . En d'autres termes, l'unité membranaire MEMB comprend au moins un des étages membranaires M1, M2, M3, dans lesquels le perméat Pi, est plus riche en hélium que le rétentat Ri et au moins un des étages membranaires M1, M2, M3, dans lequel le rétentat Rj est plus riche en hélium que le perméat Pj.

Selon un mode de réalisation, l'étage membranaire M2 comprenant une membrane Me2 telle que le rétentat R2 est plus riche en hélium que le perméat P2 est agencé entre les deux étages membranaires M1, M3, dans lesquels le perméat P1, P3, est plus riche en hélium que le rétentat R1, R3. Ces étages membranaires M1, M2, M3 seront appelés premier, deuxième et troisième étage membranaire M1, M2, M3 en rapport à leur ordonnancement dans le sens d'acheminement de la phase gazeuse G2. Un tel agencement permet d'améliorer l'efficacité du système S de traitement en minimisant le nombre de recyclages intermédiaires et simplifiant leur disposition tout en obtenant la séparation membranaire (étape E31) la plus efficace dans des conditions de fonctionnement prédéterminées. De cette manière, la séparation membranaire (étape E31) comprend avantageusement une communication (étape E314) selon laquelle :
- une partie du flux de perméat P1 du premier étage membranaire M1 est donc acheminée à l'entrée A' du deuxième étage membranaire M2 tandis que l'autre partie du flux de perméat P1 est optionnellement recyclée (étape E313) vers l'entrée A du premier étage membranaire M1 et que le flux de rétentat R1 est évacué ;
- le flux de rétentat R2 du deuxième étage membranaire M2, plus pur en hélium que le perméat P2 de cet étage membranaire M2, est acheminé à l'entrée A" du troisième étage membranaire M3 tandis que le flux de perméat P2 est optionnellement recyclé (étape E313') en partie vers l'entrée A du premier étage membranaire M1 et en partie vers l'entrée A' du deuxième étage membranaire M2 ;
- une partie du flux de perméat P3 du troisième étage membranaire M3 est acheminée vers la sortie B" du troisième étage membranaire M3, tandis que l'autre partie est optionnellement recyclée (étape E313") vers l'entrée A" de ce troisième étage membranaire M3 et que le flux de rétentat R3 est acheminé vers l'une des entrées A et/ou A', d'un des étages membranaires M1, M2, précédents et avantageusement vers le premier étage membranaire M1.

L'unité membranaire MEMB peut être agencée d'une manière différente de celle précédemment décrite et tout particulièrement en ce qui concerne les recyclages intermédiaires et/ou le positionnement l'étage membranaire Mj comprenant une membrane Mej telle que le rétentat Rj est plus riche en hélium que le perméat Pj par rapport à le/les étages membranaires Mi dans le(s)quel(s) le perméat Pi est plus riche en hélium que le rétentat Ri. En effet, l'étage membranaire Mj comprenant une membrane Mej telle que le rétentat Rj est plus riche en hélium que le perméat Pj peut être en entrée ou en sortie de l'unité membranaire MEMB, avant/après/entre le/les étages membranaires Mi dans le(s)quel(s) le perméat Pi est plus riche en hélium que le rétentat Ri. Mais, quel que soit cet agencement, l'unité membranaire MEMB est propre à réaliser la séparation de membranaire (étape E31) du gaz G2 de manière à ce qu'un gaz G21 en sortie de l'unité membranaire MEMB présente une pureté en hélium supérieure à la pureté en hélium du gaz G2 introduit. De plus, de manière avantageuse, l'unité membranaire MEMB dans de telles configurations, avec seulement trois étages membranaires, M1,M2,M3, récupère l'hélium présent dans le gaz G2 avec un taux de récupération de plus de 90% et préférentiellement de plus de 95%.

La membrane Mex telle que le rétentat Rj est plus riche en hélium que le perméat Pj est par exemple une membrane du type polydimethylsiloxane, poly(4-methyl-1-pentene), Ethyl cellulose ou polyethylene..

La membrane Mex telle que le perméat Pi est plus riche en hélium que le rétentat Ri est par exemple une membrane du type polyimide, polysulfone, , polyphenyloxide, polycarbonate, , etc.Le compresseur 32 permet de comprimer (étape E32) le gaz G21 à une pression de 200 ou 300 bars. Le purificateur 33, par exemple un purificateur de type par adsorption cryogénique modulé en pression, permet de purifier (étape E33) le gaz G21 afin d'obtenir le gaz G3 présentant une pureté en hélium supérieure à la pureté en hélium du gaz G21. La purification (étape E33) permet d'éliminer d'éventuelles impuretés présente dans le gaz G21. Ce purificateur est constitué d'un ou plusieurs lits d'adsorbants (par exemple silice). Dans le purificateur 33, le gaz G21 passe sous pression sur un lit refroidit à des basses températures par un fluide cryogénique. Les éventuelles impuretés sont piégées sur le lit. Pour être régénéré le lit est ensuite réchauffé et baissé en pression.

Les étapes de compression (étape E32) et de purification (étape E33) peuvent être réalisées dans cette ordre ou en ordre inverse et sont réalisées après la séparation membranaire (étape E31).

Selon un mode de réalisation, le gaz G2 comprend de l'hélium, une fraction de dioxyde de carbone inférieure à 50% et d'autres composés comme par exemple de l'azote, optionnellement majoritaire en fraction volumique. Pour un tel gaz, la séparation membranaire (étape E31) mise en oeuvre par le procédé de traitement permet de d'obtenir en sortie de l'unité membranaire MEMB le gaz G21 avec une pureté en hélium d'au moins 90%. A partir d'un tel gaz G21, la compression et la purification (étapes E32, E33) permettent d'atteindre une haute pureté d'hélium (grade 5.0, 99.999%). Préférentiellement, la séparation de l'hélium (étape E3) mise en oeuvre par l'unité de séparation de l'hélium 3, permet d'obtenir en sortie un gaz G3 dont la pureté en hélium est supérieure à la pureté en hélium du gaz G2 et avantageusement une pureté en hélium d'au moins 99,999%.

### Procédé et un système de traitement selon un deuxième mode de réalisation

Selon un deuxième mode de réalisation, illustré sur la figure 3, un gaz comprenant de l'hélium et du dioxyde de carbone est traité.

Selon ce deuxième mode de réalisation le traitement met en oeuvre uniquement la séparation du dioxyde de carbone (étape E2) et la séparation de l'hélium (étape E3), voir même seulement la séparation du dioxyde de carbone (étape E2) et la séparation membranaire (étape E31), afin d'obtenir un gaz dont la pureté en hélium est améliorée. Le gaz G1 introduit dans l'unité de séparation 2 comprend préférentiellement de l'hélium et du dioxyde de carbone et est avantageusement exempt d'impuretés.

### Procédé et un système de traitement selon un troisième mode de réalisation

Selon un troisième mode de réalisation, illustré sur la figure 3, un gaz comprenant de l'hélium et des impuretés est traité.

Selon ce troisième mode de réalisation le traitement met en oeuvre uniquement le pré-traitement (étape E1) et la séparation de l'hélium (étape E3), voire seulement le pré-traitement (étape E1) et la séparation membranaire (étape E31), afin d'obtenir un gaz dont la pureté en hélium est améliorée.

Avantageusement, le fluide F0 comprend de l'hélium, du dioxyde de carbone et des impuretés, mais préférentiellement une fraction en dioxyde de carbone inférieure à 50%.

### Procédé et un système de traitement selon un troisième mode de réalisation

Selon un quatrième mode de réalisation, illustré sur la figure 3, un gaz comprenant de l'hélium est traité.

Selon un mode de réalisation alternatif, le traitement met en oeuvre uniquement la séparation de l'hélium (étape E3), afin d'obtenir un gaz dont la pureté en hélium est améliorée. Avantageusement, le gaz G2 comprend de l'hélium et d'autres composé, par exemple une éventuelle fraction de dioxyde de carbone inférieure à 50% et une fraction d'hélium inférieure à 10%.

Selon un mode de réalisation alternatif, le système S met en oeuvre uniquement la séparation membranaire (étape E31). Ce mode de réalisation permet d'obtenir le gaz G21 présentant une pureté en hélium de plus de 90% avec un taux de récupération d'hélium de plus de 95%.

### Exemples de mise en œuvre possible

Selon un mode de réalisation, le fluide F0 est composé de dioxyde de carbone, d'azote et d'hélium. De manière avantageuse, le fluide F0 se décompose en une fraction molaire de dioxyde de carbone entre 20 et 99 % et préférentiellement entre 50 et 95 %. L'azote représente avantageusement entre 1 et 80 % de la fraction molaire et préférentiellement entre 5 et 50 %. La teneur en hélium peut varier dans toutes les limites, mais est de préférence comprise entre 0,01 et 80 % en fraction molaire, de manière particulièrement préférée 0,03 et 1 % en fraction molaire du gaz. En outre, le fluide F0 peut comprendre des fractions d'eau, de méthane, de propane, de n-butane, de n-pentane etc... dans de faibles proportions, plus particulièrement comprises entre 0,001 et 10 %.

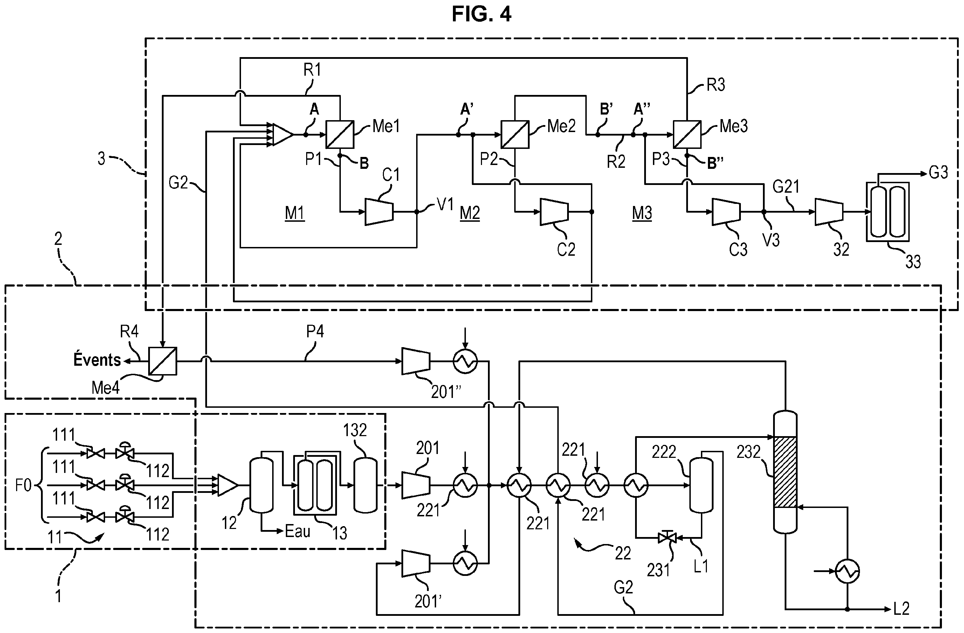

La figure 4 illustre une réalisation du système S de traitement selon le premier mode de réalisation. Ce mode de réalisation n'est pas restrictif et présente seulement une réalisation possible du système S de traitement d'un gaz propre à mettre en oeuvre un procédé tel que précédemment décrit.

L'unité de pré-traitement 1 du système S comprend l'étage de transport 11 qui présente avantageusement plusieurs puits, par exemple trois, propre à conduire (étape E11) le fluide F0 d'une source, à laquelle il est relié, à l'étage de séchage 12 du fluide F0. Chacun des puits possède sa propre vanne de contrôle du débit 111 de fluide F0 et sa propre vanne de régulation de pression 112. Les vannes de régulation de pression 112 sont adaptées pour maintenir une pression inférieure à 4 bars. L'étage de transport 11 est en communication avec l'étage de séchage 12 qui comprend un ballon de séparation, une cuve réservoir (non représentée) pour recueillir les condensats et un sécheur de type adsorbant régénérable. Le ballon de récupération permet de séparer les condensats du fluide F0. Le fluide F0 passe ensuite dans l'étage d'élimination des impuretés 13 qui comprend une cuve d'absorbant 132 captant les hydrocarbures les plus lourds, afin d'obtenir le gaz G1 qui est communiqué à l'unité de séparation 2.

L'unité de séparation 2 comprend un compresseur 201 en amont d'une série d'échangeurs de chaleur. Le compresseur 201 est propre à augmenter la pression du gaz G1 jusqu'à près de 50 bars de manière à faciliter la liquéfaction E22 ultérieure. Le train d'échangeurs 22 mettant en oeuvre la liquéfaction E22 du dioxyde de carbone présent dans le gaz G1 comprend plusieurs échangeurs 221, par exemple entre un et dix, et préférentiellement cinq, propres à faire baisser la température du gaz G1 en dessous de 8°C et par exemple à - 35°C, +/- 10%. Le gaz G1 ainsi refroidi est communiqué à un ballon de séparation 222 permettant d'obtenir un flux de phase liquide L1 comprenant du dioxyde de carbone et un flux de phase gazeuse, représentant le gaz G2 par la suite. La phase liquide L1 présente un niveau qui est régulé dans le ballon de séparation 222 et elle est récupérée et acheminée vers l'étage E23 où elle est détendue dans le détendeur Joule-Thomson 231 puis transmise à la colonne de stripping 232. La colonne de stripping 232 présente un débit de fond et un débit de tête. Le débit de tête de la colonne de stripping 232 est renvoyé vers l'entrée d'un compresseur 201' puis envoyé en entrée du train d'échangeurs 22. Le débit de fond est stocké dans des cuves de stockage (non représentées). La colonne de stripping 232 comprend un analyseur qui permet de vérifier la pureté en dioxyde de carbone de la phase liquide L2 dans le débit de fond avant son stockage dans les cuves de stockage.

L'unité de séparation de l'hélium 3 reçoit de l'unité de séparation 2 le gaz G2. Le gaz G2 est avantageusement détendu par une vanne de détente permettant de baisser la pression de la phase gazeuse à une pression comprise entre 200 bars et 5 bars et préférentiellement entre 50 à 10 bars. Le gaz G2 communiqué à l'unité de séparation de l'hélium 3 afin d'y être purifié (étape E3) présente une teneur en dioxyde de carbone comprise entre 10 et 50 % du volume du gaz G2 tandis que l'azote représente une portion comprise entre 50 et 98% et l'hélium entre 0.1 et 5%. La température de ce gaz est comprise entre 20 et 40 °C. L'unité de séparation de l'hélium 3 correspond à l'unité de séparation de l'hélium 3 décrit en relation avec la figure 2 et dans laquelle l'unité membranaire MEMB présente trois membranes Me1, Me2, Me3 dont la membrane Mei différente des deux autres sont placée entre ces deux autres membranes Mej, Meh. L'unité membranaire MEMB présente en outre les recyclages intermédiaires (étapes E313, E313', E313"). De plus, le rétentat R1 du premier étage membranaire M1 est avantageusement recyclé dans une quatrième membrane Me4 dont le rétentat est évacué du système S et le perméat est recyclé dans le deuxième étage 2 du système S. Le perméat de la quatrième membrane Me4 est comprimé par un compresseur 201" afin d'atteindre une pression de 50 bars pour être refroidi dans le train d'échangeur 21 du deuxième étage 2. Et le rétentat R3 du troisième étage membranaire M3 est avantageusement acheminé vers l'entrée A du premier étage membranaire M1 afin d'être purifié (étape E311) de nouveau.

Le troisième étage 3 comprend, en sortie B" de l'unité membranaire MEMB, un compresseur C4 afin d'augmenter la pression (étape E32) de la phase gazeuse G31 à une pression de près de 200 ou 300 bars, à partir de la pression à laquelle la phase gazeuse G31 sort de l'unité membranaire MEMB, c'est-à-dire la pression ambiante. Et, le purificateur 33, en l'occurrence un PSA cryogénique, utilise de l'azote liquide afin de réaliser la purification de la phase gazeuse G31 et obtenir une phase gazeuse G3 de grade 5.0 (99,999%) en pureté d'hélium.

## Revendications

1. Procédé de traitement d'un gaz , le procédé comprenant une étape d'introduction (E30) d'un gaz (G2) comprenant de l'hélium dans une unité membranaire (MEMB), l'unité membranaire (MEMB) comprenant trois membranes (Me1, Me2, Me3) polymères en séries, au moins une des membranes (Me1, Me2, Me3) étant configurée pour que son perméat (P1, P2, P3) soit plus riche en hélium que son rétentat (R1, R2, R3), tandis qu'au moins une autre des membranes (Me1, Me2, Me3) est configurée pour que son rétentat (R1, R2, R3) soit plus riche en hélium que son perméat (P1, P2, P3), l'unité membranaire (MEMB) mettant en oeuvre une étape de séparation membranaire (E31) de manière à obtenir un gaz (G21) en sortie de l'unité membranaire (MEMB) présentant une pureté en hélium supérieure à la pureté en hélium du gaz (G2) introduit dans l'unité membranaire (MEMB).

2. Procédé selon la revendication 1, comprenant une étape d'introduction (E20) d'un gaz (G1) comprenant de l'hélium et du dioxyde de carbone dans une unité de séparation du dioxyde de carbone (2) mettant en oeuvre une étape de séparation du dioxyde de carbone (E2) en une phase liquide (L1) comprenant tout ou partie du dioxyde de carbone du gaz (G1) introduit dans l'unité de séparation du dioxyde de carbone (2) et le gaz (G2) introduit dans l'unité membranaire (MEMB) et présentant une pureté en hélium supérieure à la pureté en hélium du gaz (G1) introduit dans l'unité de séparation du dioxyde de carbone (2).

3. Procédé selon l'une quelconque des revendications 1 à 2, comprenant une étape d'introduction (E10) d'un fluide (F0) comprenant de l'hélium, du CO2 et des impuretés dans une unité de prétraitement (1) mettant en oeuvre une étape de pré-traitement (E1) pour obtenir un gaz exempt au moins d'eau, d'éléments chimiques indésirables et d'éléments solides formant des impuretés.

4. Procédé selon l'une quelconque des revendications 1 à 3, le gaz (G2) introduit dans l'unité membranaire (MEMB) comprend de l'hélium, du dioxyde de carbone et une majorité d'azote et le gaz (G21) en sortie de l'unité membranaire (MEMB) présente une pureté en hélium d'au moins 90%.

5. Procédé selon l'une des revendications 1 à 4, l'unité membranaire (MEMB) comprenant un premier (M1), un deuxième (M2) et un troisième étage membranaire (M3), chacun comprenant une des membranes (Me1, Me2, Me3), procédé dans lequel la séparation membranaire (E31) du gaz (G2) introduit dans l'unité membranaire (MEMB) est réalisée successivement par chaque étage membranaire (M1, M2, M3) et comprend :
- une séparation (E311, E311', E311") du gaz (G2) introduit dans l'unité membranaire (MEMB) en un perméat (P1, P2, P3) et un rétentat (R1, R2, R3), réalisée par la membrane (Me1, Me2, Me3),
- une recompression (E312, E312', E312") du perméat (P1, P2, P3), et
- un recyclage intermédiaire (E313, E313', E313") du perméat (P1, P2, P3) recompressé consistant à transmettre une partie du perméat (P1, P2, P3) recompressé, vers une entrée (A, A', A") de l'unité membranaire (M1, M2, M3) considérée.

6. Procédé selon la revendication 5, dans lequel la séparation membranaire (E31) est réalisé par une communication (E314) :
- d'une partie d'un premier perméat (P1) plus riche en hélium qu'un premier rétentat (R1) du premier étage membranaire (M1) au deuxième étage membranaire (M2),
- d'un deuxième rétentat (R2) plus riche en hélium qu'un deuxième perméat (P2) du deuxième étage membranaire (M2) au troisième étage membranaire (M3),
- d'une partie du deuxième perméat (P2) au premier étage membranaire (M1),
- d'une partie d'un troisième perméat (P3) plus riche en hélium qu'un troisième rétentat (R3) du troisième étage membranaire (M3) à une sortie de l'unité membranaire (MEMB), et
- du troisième rétentat (R3) au premier étage membranaire (M1).

7. Procédé selon l'une quelconque des revendications 1 à 6, comprenant une étape de séparation de l'hélium (E3) mise en oeuvre par une unité de séparation de l'hélium (3), l'étape de séparation de l'hélium (E3) comprenant, outre la séparation membranaire (E31), une compression (E32) et une purification (E33) par adsorption cryogénique modulée en pression, un gaz (G3) en sortie de l'unité de séparation de l'hélium (3) présentant une pureté en hélium d'au moins 99,999%.

8. Procédé selon l'une quelconque des revendications 2 et 3 à 7, dans lequel la séparation du dioxyde de carbone (E2) comprend une compression et un refroidissement (E21) du gaz (G1) introduit dans l'unité de séparation du dioxyde de carbone (2) à une pression et une température permettant la liquéfaction partielle du gaz (G1) introduit dans l'unité de séparation du dioxyde de carbone (2) au moyen d'un train d'échangeurs (21).

9. Procédé selon l'une quelconque des revendications 2 et 3 à 8, dans lequel la phase liquide (L1) est successivement :
- séparée (E22) du gaz (G2) introduit dans l'unité membranaire (MEMB),
- détendue et envoyée (E23) dans une colonne de stripping (232), de manière à obtenir un flux liquide à un niveau de qualité alimentaire (L2) en pied de colonne de stripping (232) prêt à être stocké.

10. Système (S) comprenant une unité membranaire (MEMB) comprenant trois membranes (Me1, Me2, Me3) polymères en séries, au moins l'une des membranes (Me1, Me2, Me3) étant telle que son perméat (P1, P2, P3) soit plus riche en hélium que son rétentat (R1, R2, R3) à l'inverse d'au moins une autre des membranes (Me1, Me2, Me3), l'unité membranaire (MEMB) étant configurée pour mettre en oeuvre une étape de séparation membranaire (E31) d'un procédé de traitement d'un gaz (G2) introduit dans l'unité membranaire (MEMB) comprenant de l'hélium, selon lequel un gaz (G21) en sortie de l'unité membranaire (MEMB) présente une pureté en hélium supérieure à la pureté en hélium du gaz (G2) introduit dans l'unité membranaire (MEMB).

11. Système (S) selon la revendication 10, comprenant une unité de séparation du dioxyde de carbone (2) disposée en amont de l'unité membranaire (MEMB) et configurée pour mettre en oeuvre une étape de séparation du dioxyde de carbone (E2) contenu dans un gaz (G1) introduit dans l'unité de séparation du dioxyde de carbone (2) et selon laquelle on obtient une phase liquide (L1) comprenant tout ou partie du dioxyde de carbone du gaz (G1) introduit dans l'unité de séparation du dioxyde de carbone (2) et une phase gazeuse comprenant de l'hélium et présentant une pureté en hélium supérieure à la pureté en hélium du gaz (G1) introduit dans l'unité de séparation du dioxyde de carbone (2).

12. Système (S) selon l'une des revendications 10 et 11, comprenant une première unité (1) disposée à une entrée du système (S) et configurée pour mettre en oeuvre une étape de pré-traitement (E1) d'un fluide (F0) comprenant de l'hélium, du dioxyde de carbone et des impuretés et selon laquelle on obtient un gaz exempt au moins d'eau, d'éléments chimiques indésirables et d'éléments solides formant des impuretés.

13. Système (S) selon l'une des revendications 10 à 12, dans lequel l'unité membranaire (MEMB) comprend :
- un premier étage membranaire (M1) comprenant une première membrane (Me1) telle que son perméat (P1) soit plus riche en hélium que son rétentat (P2),
- un deuxième étage membranaire (M2) recevant en entrée (A') une partie du perméat (P1) du premier étage membranaire (M1) et comprenant une deuxième membrane (Me2) telle que son rétentat (R2) soit plus riche en hélium que son perméat (P2), et
- un troisième étage membranaire (M3) recevant en entrée (A") le rétentat (R2) du deuxième unité membranaire (M2) et comprenant une troisième membrane (Me3) telle que son perméat (P3) est plus riche en hélium que son rétentat (R3).

14. Système (S) selon l'une des revendications 10 à 13, comprenant une dernière unité (3), la dernière unité comprenant l'unité membranaire (MEMB) un compresseur (32) et un purificateur cryogénique (33).

15. Système (S) selon l'une quelconque des revendications 10 à 14, dans lequel l'unité de séparation (2) comprend un train d'échangeurs (21) adapté pour permettre le refroidissement (E21) du gaz (G1) introduit dans l'unité de séparation du dioxyde de carbone (2) et un ballon de séparation (212) adapté pour séparer le gaz (G1) introduit dans l'unité de séparation du dioxyde de carbone (2) en une phase liquide (L1) et le gaz (G2) introduit dans l'unité membranaire (MEMB).
